# FASCICULE DE BREVET EUROPEEN

(11) **EP 1 181 442 B1**
(45) Date de publication et mention de la délivrance du brevet: **10.03.2004**
(21) Numéro de dépôt: 00940451.8
(22) Date de dépôt: 07.06.2000
(51) Int. Cl.: F02M 25/08, F16K 31/06, H01F 7/08

(54) **ELECTROVANNE DE PURGE POUR DISPOSITIF D'EVACUATION DE VAPEURS**
ELEKTROMAGNETVENTIL FÜR ENTLÜFTUNGSVORRICHTUNG VON DÄMPFEN
SOLENOID BLEED VALVE FOR A DEVICE FOR THE DISPOSAL OF VAPOURS

(30) Priorité: 08.06.1999 FR 9907174
(43) Date de publication de la demande: 27.02.2002
(73) Titulaire: Johnson Controls Automotive Electronics, 95520 Osny (FR)
(72) Inventeur: VAZ DE AZEVEDO, José, F-63320 Saint-Vincent (FR); DONCE, Lucien, F-95420 Magny-en-Vexin (FR)
(74) Mandataire: Fruchard, Guy
(86) Numéro de dépôt international: PCT/FR2000/001561
(87) Numéro de publication internationale: WO 2000/075502

(56) Documents cités:
- DE-A- 3 844 056
- DE-A- 19 721 562
- FR-A- 2 777 338
- US-A- 3 179 859
- US-A- 4 869 461
- US-A- 5 657 962

## Description

La présente invention concerne des perfectionnements apportés aux électrovannes de purge pour dispositif d'évacuation de vapeurs, ladite électrovanne comprenant :
- un boîtier muni d'un orifice d'arrivée des vapeurs et d'un orifice de sortie des vapeurs,
- un bobinot d'électroaimant monté dans ledit boîtier,
- une armature métallique en matériau magnétique située en regard d'une extrémité d'un noyau magnétique dudit bobinot d'électroaimant et déplaçable axialement entre une première position sous l'action d'un ressort de rappel en l'absence d'excitation de l'électroaimant et une seconde position sous l'action de l'électroaimant excité, à l'encontre du ressort de rappel,
- un siège de clapet monté en relation étanche avec le susdit orifice de sortie du boîtier, et
- un clapet obturateur solidaire de la susdite armature métallique mobile, le clapet étant en appui contre son siège ou écarté de celui-ci lorsque l'armature métallique mobile est respectivement dans sa première ou sa seconde position.

De telles électrovannes peuvent trouver une application préférée, bien que non exclusive, dans les dispositifs de récupération des vapeurs d'essence qui s'accumulent dans les réservoirs d'essence, au-dessus de la phase liquide, destinés à accompagner un moteur à allumage commandé, en particulier dans les véhicules automobiles, afin d'éviter le rejet desdites vapeurs directement dans l'atmosphère.

Le document DE-A-3 844 056 enseigne de faire supporter le siège du clapet par une entretoise reposant sur le boîtier de l'électroaimant.

On connaît une électrovanne du type précité dans laquelle le siège de clapet est prévu directement sur le boîtier, en conjonction avec le susdit orifice de sortie des vapeurs.

Une telle électrovanne est actuellement fabriquée en série et est installée dans des véhicules automobiles. Cette électrovanne donne satisfaction sur le plan de son fonctionnement et de son efficacité.

Par contre, elle présente l'inconvénient d'être bruyante lorsqu'elle est en fonctionnement et son bruit peut se révéler gênant pour les occupants du véhicule, et cela d'autant plus que les véhicules modernes font l'objet d'une réduction importante du fond sonore lorsqu'ils sont en fonctionnement.

Le bruit généré par l'électrovanne est dû essentiellement aux chocs de l'armature mobile projetée violemment contre le siège et le noyau lorsqu'elle est commandée par l'électroaimant excité en courant pulsé, par exemple avec une fréquence de l'ordre de 10 Hz. Ces chocs axiaux sont communiqués au boîtier via le siège qui est solidaire de celui-ci et via le bobinot qui est supporté par le boîtier. Sous l'action de ces chocs, le boîtier forme une boîte de résonance et transmet les vibrations à l'environnement par voie aérienne et par voie solidienne (support du boîtier de l'électrovanne sur le bâti du véhicule).

Malgré le recours possible à des montages flottants, les constructeurs automobiles demandent qu'en outre les dispositifs soient individuellement rendus plus silencieux afin que chaque dispositif contribue à l'obtention d'un niveau sonore aussi faible que possible dans l'habitacle du véhicule.

Il est donc requis que ce soit l'électrovanne elle-même qui soit revue et perfectionnée afin de réduire de façon sensible les vibrations du boîtier, et donc les bruits propagés dans l'environnement.

L'électrovanne de purge telle que mentionnée au préambule est agencée en ce que ledit siège de clapet est supporté par le bobinot d'électroaimant et est solidaire d'un prolongement tubulaire qui est engagé. coaxialement dans l'orifice de sortie prévu dans le boîtier et qui possède un diamètre moindre que celui-ci, un joint torique d'étanchéité étant interposé radialement entre ledit prolongement tubulaire et ledit orifice de sortie, et se caractérise par
en ce que le bobinot d'électroaimant comporte :
- un moyeu avec deux flasques d'extrémité
- un bobinage électrique monté coaxialement autour du moyeu,
- un noyau magnétique fixé coaxialement à l'intérieur du moyeu; et
- un circuit magnétique qui entoure lesdits moyeu et bobinage et qui est supporté par un premier flasque du moyeu situé du côté du susdit siège,
en ce que le susdit premier flasque du moyeu comporte une collerette périphérique de support dans le boîtier, ladite collerette périphérique étant rattachée au moyeu par plusieurs rais d'étendue générale radiale et chaque rai étant, au moins en partie, aminci par rapport à la collerette et au moyeu, ce grâce à quoi les rais amincis procurent une suspension élastique du bobinot vis-à-vis du boîtier et un filtrage des vibrations entre le bobinot d'électroaimant et le boîtier,
et en ce que le siège de clapet est supporté par ledit premier flasque du moyeu, ce grâce à quoi le clapet obturateur et son siège sont au moins fortement découplés, du point de vue vibratoire, vis-à-vis du boîtier.

Grâce à cet agencement, les chocs générés par la venue en butée de l'armature mobile restent concentrés sur le bobinot dont le siège de clapet a été rendu solidaire. Au surplus, le contact étanche du joint torique avec, d'un côté, le prolongement tubulaire du siège de clapet et avec, de l'autre côté, l'orifice de sortie se fait selon une direction strictement radiale, tandis que la susdite venue en butée de l'armature mobile s'effectue selon une direction axiale : le choc qui résulte de cette butée est essentiellement un choc axial avec une composante transversale (ou radiale) très faible, voire nulle.

On obtient ainsi un bon découplage, du point de vue de la propagation des vibrations, entre le bobinot et le siège de clapet qui en est solidaire, d'une part, et le boîtier de l'électrovanne, d'autre part. La propagation du bruit de fonctionnement de l'électrovanne par voie aérienne et/ou par voie solidienne, à partir du boîtier, se trouve ainsi fortement atténuée

Selon la revendication 1, le bobinot d'électroaimant comporte :
- un moyeu avec deux flasques d'extrémité,
- un bobinage électrique monté coaxialement autour du moyeu,
- un noyau magnétique fixé coaxialement à l'intérieur du moyeu ; et
- un circuit magnétique qui entoure lesdits moyeu et bobinage et qui est supporté par un premier flasque du moyeu situé du côté du susdit siège,
et le siège est supporté par ledit premier flasque du moyeu. Dans ce cas, il est intéressant que ledit premier flasque soit muni d'une multiplicité de doigts saillants et que le siège soit formé dans une plaque de butée rapportée sur lesdits doigts saillants qui peuvent alors être réalisés sous une forme fine. On peut au surplus envisager que le susdit prolongement tubulaire soit une portion saillante de la plaque de butée qui entoure l'ouverture définie au centre du siège et s'étende à l'opposé dudit siège.

Dans un exemple concret de réalisation, le premier flasque du moyeu comporte une collerette périphérique de support dans le boîtier, ladite collerette pouvant notamment être discontinue et présenter deux tronçons de collerette diamétralement opposés. Par un tel agencement, on facilite l'implantation avec possibilité de détrompage du bobinot d'électroaimant dans le boîtier et l'on réduit l'importance du contact entre le bobinot et le boîtier qui supporte celui-ci : on entrave ainsi la transmission des vibrations en direction du boîtier.

Il est également envisageable, dans cet agencement, de prévoir que la collerette périphérique soit rattachée au moyeu par plusieurs rais d'étendue générale radiale et que chaque rai soit, au moins en partie, aminci par rapport à la collerette et au moyeu, ce grâce à quoi les rais amincis procurent une suspension élastique du bobinot vis-à-vis du boîtier et un filtrage des vibrations entre le bobinot d'électroaimant et le boîtier.

Il est aussi envisageable que le circuit magnétique soit en forme générale de U bordé supérieurement par des ailes radiales, que les ailes radiales soient solidarisées à la susdite collerette, et que le fond du circuit magnétique soit percé d'une ouverture traversée sans contact par l'extrémité correspondante du noyau magnétique : on évite ainsi le contact physique entre le fond du circuit magnétique et le noyau magnétique soumis aux chocs de butée de l'armature mobile et on réduit, là aussi, la propagation des vibrations depuis le noyau jusqu'au boîtier via le circuit magnétique.

Au surplus, on peut prévoir, toujours dans le même but, que le fond du circuit magnétique soit axialement écarté du second flasque du moyeu du bobinot d'électroaimant, ce grâce à quoi les vibrations du bobinot d'électroaimant ne sont pas notablement transmises au circuit magnétique par cette voie.

Dans un exemple concret de réalisation, l'armature métallique mobile est une plaquette sur une face de laquelle est solidarisée une couche d'un matériau d'étanchéité constituant le clapet étanche proprement dit.

De préférence également, l'autre face de la plaquette constituant l'armature mobile est munie de moyens amortisseurs, tels qu'un anneau ou des plots disposés annulairement, situés en regard de l'extrémité frontale du noyau magnétique pour amortir le choc du contact de l'armature mobile avec le noyau.

De façon avantageuse, le noyau magnétique peut être déplacé axialement dans le moyeu aux fins de réglage de l'entrefer entre la pièce métallique mobile et l'extrémité en regard du noyau.

Une électrovanne de purge qui réunit l'ensemble ou au moins la plupart des dispositions exposées ci-dessus présente un découplage efficace, du point de vue vibratoire, de la partie vibrante vis-à-vis du boîtier et, dans l'exemple cité plus haut d'application au domaine automobile pour l'évacuation des vapeurs d'essence, on réalise une électrovanne n'engendrant plus de bruit de fonctionnement sensible au sein du véhicule.

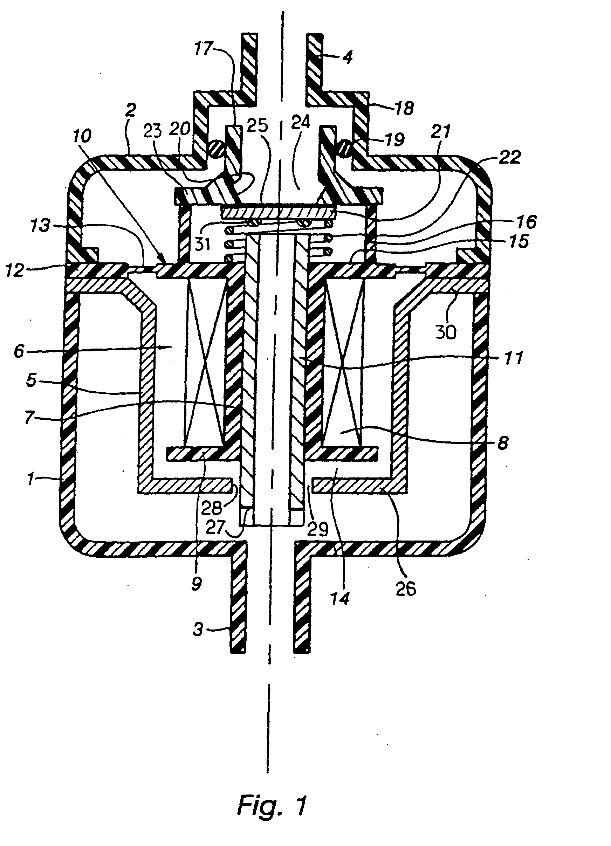

L'invention sera mieux comprise à la lecture de la description détaillée qui suit d'un mode de réalisation particulier, qui est préféré, donné à titre d'exemple non limitatif. Dans cette description, on se réfère au dessin annexé sur lequel la figure unique est une vue de côté, en coupe, dudit mode de réalisation préféré dans une configuration qui est celle d'une électrovanne de purge pour l'évacuation des vapeurs d'essence d'un réservoir d'essence de véhicule automobile.

L'électrovanne de purge illustrée sur cette figure comporte un boîtier, notamment constitué en matière plastique rigide, formé d'un corps de boîtier inférieur 1 et d'un corps de boîtier supérieur ou couvercle 2. Le corps de boîtier inférieur 1 forme une cuve dont le fond présente un orifice d'entrée 3 (prolongé par un conduit d'entrée) pour l'admission des vapeurs et le corps de boîtier supérieur ou couvercle 2 est muni d'un orifice de sortie des vapeurs 4 (prolongé par un conduit de sortie).

Un circuit 5 en matériau magnétique est disposé dans la cuve 1 et, étant notamment replié en forme générale de U, entoure un bobinot 6 d'électroaimant.

Le bobinot 6 comporte un moyeu 7 en matière plastique moulé d'une seule pièce avec un premier flasque d'extrémité ou flasque supérieur 10 et un second flasque d'extrémité ou flasque inférieur 9. Un noyau magnétique tubulaire 11 en forme générale de tige est disposé à l'intérieur du moyeu 7. Un bobinage électrique 8 est monté fixe sur le moyeu du bobinot.

Le flasque supérieur 10 est composé de trois parties radiales successives. La partie radialement extérieure forme une collerette 12 qui sert à la fixation du bobinot 6 dans le boîtier et qui, à cet effet, est pincée entre le corps de boîtier inférieur 1 et le corps de boîtier supérieur 2. La collerette périphérique 12 peut être continue, mais, pour faciliter la conception d'ensemble de l'électrovanne (et notamment laisser place à un bornier de raccordement électrique du bobinage 8 et autoriser un agencement de détrompage pour son montage correct), la collerette 12 est discontinue et présente deux tronçons de collerette diamétralement opposés.

La partie radialement médiane est constituée de rais 13 de plus faible épaisseur (amincis) de manière à former une membrane discontinue élastiquement déformable dans le sens axial qui autorise un relativement faible déplacement axial du bobinot 6 par rapport au boîtier.

La partie radialement intérieure 15 du flasque supérieur 10 est de nouveau plus épaisse et sert, avec le flasque inférieur 9, au maintien du bobinage 8.

Un organe de support 16, avantageusement formé de plusieurs doigts de préférence minces, saillants verticalement et solidaires du flasque supérieur 10, supporte une plaque de butée 23 qui est munie d'une ouverture axiale 24 et qui comporte, s'étendant verticalement vers le haut, un prolongement tubulaire 17 engagé coaxialement à l'intérieur d'une partie tubulaire 18 sous-jacente à l'orifice de sortie 4 du corps de boîtier supérieur 2. Un joint d'étanchéité torique 19 est disposé entre la surface extérieure de la partie tubulaire 17 et la surface intérieure de la partie tubulaire 18 pour isoler l'intérieur de l'électrovanne de l'orifice de sortie 4. On soulignera ici que les contacts du joint 19 avec les parties tubulaires 17 et 18 s'étendent radialement exclusivement.

La zone périphérique inférieure de l'ouverture axiale 24 est conformée en lèvre 20 formant un siège de clapet.

Enfin, une armature métallique 21 formée d'une plaquette en matériau magnétique est située en regard de l'extrémité supérieure du noyau magnétique 11, entre celle-ci et le siège de clapet 20 et est repoussée élastiquement en direction du siège 20 par un ressort en hélice 22 coaxial au noyau 11. A l'armature mobile 21 est solidarisé un clapet obturateur 25 propre à coopérer de façon étanche avec ledit siège 20 pour obturer l'ouverture 24. Dans le mode de réalisation simple illustré sur la figure unique, le clapet 25 proprement dit est simplement constitué par une couche d'un matériau d'étanchéité déposée sur la face supérieure de l'armature mobile 21.

Lorsque le bobinage 8 n'est pas alimenté (courant nul dans le bobinage, électroaimant non excité), le ressort 22 maintient le clapet 21, 25 en contact avec le siège 20. L'électrovanne est donc normalement fermée.

Lorsque le bobinage est alimenté électriquement (par exemple typiquement un courant pulsé dont le rapport cyclique a une valeur non nulle), le clapet 21, 25 oscille entre une position de butée contre le siège 20 et une position d'ouverture où il vient en butée contre l'extrémité du noyau magnétique 11. Dans l'exemple considéré d'une excitation par un courant pulsé, l'ouverture équivalente de l'électrovanne est proportionnelle à la durée moyenne d'ouverture du clapet 25, et donc au rapport cyclique du courant pulsé.

Le choc du clapet 21, 25 sur le siège 20 provoque un déplacement axial de ce siège, et donc du bobinot 6, qui est rendu possible par l'élasticité des rais 13.

De même, le choc du clapet 21, 25 sur l'extrémité du noyau magnétique 11 provoque un déplacement axial en sens inverse du bobinot 6, qui est également rendu possible par l'élasticité des rais 13.

Dans tous ces mouvements axiaux, mais de sens inverse, du bobinot 6, l'étanchéité entre le bobinot mobile et le boîtier fixe est assurée quelle que soit la position axiale du bobinot dans le boîtier grâce à la position radiale du joint 19 entre les parties coaxiales respectives 17 et 18.

Mais de façon essentielle, on notera surtout que les chocs générés par la venue en butée du clapet 21, 25 alternativement contre le siège 20 et l'extrémité du noyau Il sont des chocs axiaux. Grâce à la mise en place du joint 19 telle qu'indiquée plus haut (positionnement radial), il n'existe aucune liaison axiale entre le bobinot 6 et le boîtier. De ce fait, la composante radiale des chocs au niveau du joint étant très faible, voire nulle, le montage qui est retenu procure un découplage vibratoire extrêmement efficace entre le bobinot 6 et le boîtier 1, 2.

Au surplus, les rais 13, de par leur géométrie. amincie et leur extension radiale, non seulement procurent une liaison relativement élastique entre le bobinot 6 et le boîtier 1, 2, mais encore ne transmettent qu'une composante vibratoire radiale très faible, voire nulle.

Egalement, la couche de matériau d'étanchéité 25 formant clapet atténue le choc de la venue en butée de l'armature 21 contre le siège 23. De façon symétrique, on peut munir l'autre face de l'armature 21 avec des moyens amortisseurs 31 (par exemple sous forme d'un anneau ou de plots disposés annulairement) qui sont situés en regard de l'extrémité frontale du noyau magnétique 11 afin d'amortir le choc à l'ouverture.

Enfin, on peut également éliminer une voie de transmission des vibrations en faisant en sorte que le circuit magnétique 5 en forme de U descende plus bas que le bobinot 6 : de ce fait le fond 26 du circuit magnétique n'est en contact ni avec le flasque inférieur 9 du bobinot (intervalle 14), ni avec le fond du corps de boîtier inférieur 1.

De plus, dans l'agencement illustré à la figure unique, l'extrémité inférieure du noyau 11 peut faire saillie au-delà du fond 26 du circuit métallique 5 et cette extrémité peut être conformée pour permettre de déplacer le noyau 11 axialement par rapport au moyeu 7 afin d'autoriser un réglage de l'entrefer entre la carcasse mobile 21 et l'extrémité en regard du noyau 11. A cet effet, on peut avoir recours, par exemple, aux moyens exposés dans le document FR-A-2 706 569 : la surface externe du noyau 11 est filetée (non visible sur la figure) et noyée (par exemple par surmoulage) dans la matière plastique constitutive du moyeu 7 ; l'extrémité inférieure du noyau 11 est fendue diamétralement en 27 ; à l'aide d'un tournevis, on fait tourner le noyau qui, du fait de la présence du filetage, se rapproche ou s'éloigne de l'armature 21 selon son sens de rotation.

Dans cet agencement, pour éviter toute transmission de vibration entre le noyau 11 et le circuit magnétique 5, le fond 26 est percé d'une ouverture 28 qui présente un diamètre sensiblement supérieur à celui du noyau en laissant subsister un intervalle annulaire 29.

Pour que les intervalles d'isolement vibratoire 14 et 29 soient respectés tout en mettant en oeuvre une structure simple et aisée à assembler, on peut concevoir ce qui suit. Le circuit magnétique 5 en forme générale de U a ses deux branches qui se terminent supérieurement par des ailes 30 rabattues radialement. Ces ailes 30 sont solidarisées (par exemple par collage) à la collerette 12 précitée, et en particulier aux tronçons de collerette discontinue plus spécialement envisagés. Ainsi le bobinot 6 d'électroaimant et le circuit 5 forment un ensemble unitaire qui, d'une part, est facile à mettre en place dans le boîtier 1, 2 lors du montage et qui, d'autre part, est agencé de sorte que ses pièces constitutives soient parfaitement positionnées les unes par rapport aux autres avec notamment le maintien de l'intervalle 29.

L'ensemble des dispositions réunies au sein de l'électrovanne de purge illustrée sur la figure annexée conduit à une réduction considérable des vibrations au niveau du boîtier 1, 2, et de ce fait à une diminution sensible du bruit généré, en particulier dans un véhicule automobile, par l'électrovanne de purge en fonctionnement ; en pratique, l'électrovanne de purge en fonctionnement devient moins bruyante au sein du véhicule.

## Revendications

1. Electrovanne de purge pour dispositif d'évacuation de vapeurs, notamment pour dispositif de récupération de vapeurs d'essence présentes dans un réservoir d'essence pour un moteur à allumage commandé, ladite électrovanne comprenant :
- un boîtier (1, 2) muni d'un orifice (3) d'arrivée des vapeurs et d'un orifice (4) de sortie des vapeurs,
- un bobinot (6) d'électroaimant monté dans ledit boîtier,
- une armature métallique (21) en matériau magnétique située en regard d'une extrémité d'un noyau magnétique (11) dudit bobinot d'électroaimant et déplaçable axialement entre une première position sous l'action d'un ressort de rappel (22) en l'absence d'excitation de l'électroaimant et une seconde position sous l'action de l'électroaimant excité, à l'encontre du ressort de rappel,
- un siège de clapet (20) qui est monté en relation étanche avec le susdit orifice (4) de sortie du boîtier et qui est solidaire d'un prolongement tubulaire (17) engagé coaxialement dans l'orifice de sortie (4) prévu dans le boîtier et possédant un diamètre moindre que celui-ci, un joint torique d'étanchéité (19) étant interposé radialement entre ledit prolongement tubulaire (17) et ledit orifice de sortie (4), et
- un clapet obturateur (25) solidaire de la susdite armature métallique mobile (21), le clapet (25) étant en appui contre son siège (25) ou écarté de celui-ci lorsque l'armature métallique mobile (21) est respectivement dans sa première ou sa seconde position,
**caractérisée**
**, en ce que** le bobinot (6) d'électroaimant comporte :
- un moyeu (7) avec deux flasques d'extrémité (10, 9),
- un bobinage électrique (8) monté coaxialement autour du moyeu (7),
- un noyau magnétique (11) fixé coaxialement à l'intérieur du moyeu (7) ; et
- un circuit magnétique (5) qui entoure lesdits moyeu et bobinage et qui est supporté par un premier flasque (10) du moyeu situé du côté du susdit siège (20),
**en ce que** le susdit premier flasque (10) du moyeu comporte une collerette périphérique (12) de support dans le boîtier (1, 2), ladite collerette périphérique (12) étant rattachée au moyeu (7) par plusieurs rais (13) d'étendue générale radiale et chaque rai (13) étant, au moins en partie, aminci par rapport à la collerette et au moyeu, ce grâce à quoi les rais amincis procurent une suspension élastique du bobinot (6) vis-à-vis du boîtier et un filtrage des vibrations entre le bobinot d'électroaimant et le boîtier,
et **en ce que** le siège de clapet (20) est supporté par ledit premier flasque (10) du moyeu, ce grâce à quoi le clapet obturateur et son siège sont au moins fortement découplés, du point de vue vibratoire, vis-à-vis du boîtier.

2. Electrovanne selon la revendication 1, **caractérisée en ce que** ledit premier flasque (10) est muni d'une multiplicité de doigts saillants (16) et **en ce que** le siège (20) est formé dans une plaque de butée (23) rapportée sur lesdits doigts saillants (16).

3. Electrovanne selon la revendication 2, **caractérisée en ce que** le susdit prolongement tubulaire (17) est une portion saillante de la plaque de butée (23) qui entoure l'ouverture (24) définie au centre du siège (20) et qui s'étend à l'opposé de ce dernier.

4. Electrovanne selon l'une quelconque des revendications 1 à 3, **caractérisée en ce que** la collerette périphérique (12) est discontinue et présente deux tronçons de collerette diamétralement opposés.

5. Electrovanne selon l'une quelconque des revendications 1 à 4, **caractérisée en ce que** le circuit magnétique est en forme générale de U bordé supérieurement par des ailes radiales (30),
**en ce que** les ailes radiales (30) sont solidarisées à la susdite collerette (12),
et **en ce que** le fond (26) du circuit magnétique (5) est percé d'une ouverture (28) traversée sans contact (29) par l'extrémité du noyau magnétique (11).

6. Electrovanne selon la revendication 5, **caractérisée en ce que** le fond (26) du circuit magnétique (5) est axialement écarté (14) du second flasque (9) du moyeu (11) du bobinot d'électroaimant,
ce grâce à quoi les vibrations du bobinot d'électroaimant ne sont pas notablement transmises au circuit magnétique.

7. Electrovanne selon l'une quelconque des revendications 1 à 6, **caractérisée en ce que** l'armature métallique mobile (21) est une plaquette sur une face de laquelle est solidarisée une couche d'un matériau d'étanchéité constituant le clapet étanche (25) proprement dit.

8. Electrovanne selon la revendication 7, **caractérisée en ce que** l'autre face de la plaquette est munie de moyens amortisseurs disposés en regard de l'extrémité frontale du noyau pour amortir le choc de l'armature mobile contre le noyau.

9. Electrovanne selon l'une quelconque des revendications 1 à 8, **caractérisée en ce que** le noyau magnétique (11) peut être déplacé axialement dans le moyeu (7) aux fins de réglage de l'entrefer avec la pièce métallique mobile (21).

## Claims

1. A solenoid purge valve for a vapor removal device, in particular for a device for recovering gasoline vapor present in a fuel tank for a controlled-ignition engine, said valve comprising:
· a case (1, 2) provided with a vapor inlet orifice (3) and with a vapor outlet orifice (4);
· an electromagnet coil (6) mounted in said case;
· a metal armature (21) of magnetic material situated facing one end of a magnetic core (11) of said electromagnet coil and movable axially between a first position under drive from a return spring (22) in the absence of electromagnet excitation, and a second position under the action of the excited electromagnet, against the return spring;
a valve seat (20) mounted in leaktight relationship with the above-mentioned outlet orifice (4) of the case and which is secured to a tubular extension (17) which is engaged coaxially in the outlet orifice (4) provided in the case, and which possesses a diameter that is smaller than that of the orifice, an O-ring (19) being interposed radially between said tubular extension (17) and said outlet orifice (4); and
a closing valve member (25) secured to the above-mentioned moving metal armature (21), the valve member (25) being pressed against its seat (20) or moved away therefrom when the moving metal armature (21) is respectively in its first position and in its second position,
**characterized in that** the electromagnet coil (6) comprises:
· a hub (7) having two endplates (10, 9);
· an electrical winding (8) mounted coaxially around the hub (7);
· a magnetic core (11) fixed coaxially inside the hub (7); and
· a magnetic circuit (5) surrounding said hub and winding and supported by a first endplate (10) of the hub situated beside said seat (20), **in that** said first endplate (10) of the hub has a peripheral support collar (12) in the case (1, 2), said peripheral collar (12) being connected to the hub (7) by a plurality of spokes (13) extending generally radially, and each spoke (13) being, at least in part, thin relative to the collar and to the hub;
whereby the thin spokes provide the coil (6) with resilient suspension relative to the case and filter vibrations between the electromagnet coil and the case,
and **in that** the seat (20) is supported by said first endplate (10) of the hub, whereby the closing valve member and its seat are at least highly decoupled, from the case, from the point of view of vibration.

2. A valve according to claim 1, **characterized in that** said first endplate (10) is provided with a multiplicity of projecting fingers (16) and **in that** the seat (20) is formed in a strike plate (23) attached to said projecting fingers (16).

3. A valve according to claim 2, **characterized in that** said tubular extension (17) is a projecting portion of the strike plate (23) which surrounds the opening (24) defined in the center of the seat (20) and which extends away therefrom.

4. A valve according to anyone of claims 1 to 3, **characterized in that** the peripheral collar (12) is discontinuous and presents two diametrically-opposite collar segments.

5. A valve according to any one of claims 1 to 4, **characterized in that** the magnetic circuit is generally U-shaped with radial outside fins (30) at the top,
**in that** the radial fins (30) are secured to said collar (12), and
**in that** the bottom end wall (26) of the magnetic circuit (5) is pierced by an opening (28) through which the end of the magnetic core (11) passes without contact (29).

6. A valve according to claim 5, **characterized in that** the bottom end wall (26) of the magnetic circuit (5) is axially offset (14) from the second endplate (9) of the hub (11) of the electromagnet coil;
whereby vibration of the electromagnet coil is not transmitted significantly to the magnetic circuit.

7. A valve according to any one of claims 1 to 6, **characterized in that** the moving metal armature (21) is a small plate having a layer of sealing material secured to one face thereof to constitute the sealing valve member (25) proper.

8. A valve according to claim 7, **characterized in that** the other face of the small plate is provided with damper means placed facing the front end of the core to damp the impact of the moving armature against the core.

9. A valve according to any one of claims 1 to 8, **characterized in that** the magnetic core (11) can be moved axially inside the hub (7) in order to adjust the air gap relative to the moving metal armature (21).

## Patentansprüche

1. Magnetventil zur Entlüftung für eine Dampfabführvorrichtung, insbesondere für eine Vorrichtung zur Wiedergewinnung von in einem Benzintank für einen Motor mit Fremdzündung vorhandenen Benzindämpfen, wobei das Magnetventil Folgendes umfasst:
- ein mit einer Dampfzuströmöffnung (3) und einer Dampfabströmöffnung (4) versehenes Gehäuse (1, 2),
- eine im Gehäuse angebrachte Elektromagnetspule (6),
- einen aus magnetischem Werkstoff hergestellten Metallanker (21), der sich gegenüber einem Ende eines Magnetkerns (11) der Elektromagnetspule befindet und in Axialrichtung zwischen einer ersten Stellung bei fehlender Erregung des Elektromagneten unter der Wirkung einer Rückholfeder (22) und einer zweiten Stellung unter der Wirkung des erregten Elektromagneten gegen die Rückholfeder bewegbar ist,
- einen Klappensitz (20), der in dichter Beziehung zur Abströmöffnung (4) des Gehäuses angebracht und mit einer röhrenförmigen Verlängerung (17) fest verbunden ist, die koaxial in die im Gehäuse vorgesehene Abströmöffnung (4) eingreift und einen kleineren Durchmesser als diese aufweist, wobei eine O-Ring-Dichtung (19) radial zwischen der röhrenförmigen Verlängerung (17) und der Abströmöffnung (4) angeordnet ist, und
- eine mit dem beweglichen Metallanker (21) fest verbundene Verschlussklappe (25), die an ihrem Sitz (25) anliegt oder von diesem entfernt ist, wenn sich der bewegliche Metallanker (21) in seiner ersten bzw. seiner zweiten Stellung befindet,
**dadurch gekennzeichnet, dass**
die Elektromagnetspule (6) Folgendes umfasst:
- eine Hülse (7) mit zwei Endflanschen (10, 9),
- eine koaxial um die Hülse (7) angebrachte. elektrische Wicklung (8),
- einen koaxial im Inneren der Hülse (7) befestigten Magnetkern (11); und
- einen die Hülse und die Wicklung umgebenden Magnetkreis (5), der durch einen ersten Flansch (10) der Hülse gestützt wird, der sich auf der Seite des Sitzes (20) befindet,
der erste Flansch (10) der Hülse einen Umfangsstützkragen (12) in dem Gehäuse (1, 2) aufweist, wobei der Umfangskragen (12) durch mehrere sich allgemein radial erstreckende Speichen (13) an der Hülse (7) angebracht ist und jede Speiche (13) zumindest teilweise bezüglich des Kragens und der Hülse dünner ausgeführt ist, wodurch die verdünnten Speichen für die Spule (6) eine elastische Aufhängung bezüglich des Gehäuses und eine Schwingungsfilterung zwischen der Elektromagnetspule und dem Gehäuse bereitstellen, und dass der Klappensitz (20) von dem ersten Flansch (10) der Hülse gestützt wird, wodurch die Verschlussklappe und ihr Sitz gegenüber dem Gehäuse schwingungsmäßig zumindest zum großen Teil vom Sitz entkoppelt sind.

2. Magnetventil nach Anspruch 1, **dadurch gekennzeichnet, dass** der erste Flansch (10) mit einer Vielzahl von vorstehenden Fingern (16) versehen ist und dass der Sitz (20) in einer an den vorstehenden Fingern (16) angebrachten Anschlagplatte (23) ausgebildet ist.

3. Magnetventil nach Anspruch 2, **dadurch gekennzeichnet, dass** die röhrenförmige Verlängerung (17) ein vorstehender Teil der Anschlagplatte (23) ist, der die in der Mitte des Sitzes (20) definierte Öffnung (24) umgibt und sich von ihm weg erstreckt.

4. Magnetventil nach einem der Ansprüche 1 bis 3, **dadurch gekennzeichnet, dass** der Umfangskragen (12) unterbrochen ist und zwei diametral gegenüberliegende Kragenabschnitte aufweist.

5. Magnetventil nach einem der Ansprüche 1 bis 4,
**dadurch gekennzeichnet, dass**
der Magnetkreis die allgemeine Form eines U aufweist, das oben durch radiale Schenkel (30) begrenzt wird,
die radialen Schenkel (30) mit dem Kragen (12) fest verbunden sind,
und dass das untere Ende (26) des Magnetkreises (5) mit einer Öffnung (28) versehen ist, die ohne Berührung (29) von dem Ende des Magnetkerns (11) durchquert wird.

6. Magnetventil nach Anspruch 5, **dadurch gekennzeichnet, dass** das untere Ende (26) des Magnetkreises (5) axial von dem zweiten Flansch (9) der Hülse (11) der Elektromagnetspule entfernt ist (14), wodurch die Schwingungen der Elektromagnetspule nicht merklich auf den Magnetkreis übertragen werden.

7. Magnetventil nach einem der Ansprüche 1 bis 6, **dadurch gekennzeichnet, dass** der bewegliche Metallanker (21) eine Scheibe ist, bei der auf einer ihrer Flächen eine Lage aus Dichtungsmaterial befestigt ist, wodurch die eigentliche dichte Klappe (25) gebildet wird.

8. Magnetventil nach Anspruch 7, **dadurch gekennzeichnet, dass** die andere Fläche der Scheibe mit Dämpfungsmitteln versehen ist, die gegenüber dem vorderen Ende des Kerns angeordnet sind, um den Aufschlag des beweglichen Ankers am Kern zu dämpfen.

9. Magnetventil nach einem der Ansprüche 1 bis 8, **dadurch gekennzeichnet, dass** der Magnetkern (11) axial in der Hülse (7) verschoben werden kann, um den Luftspalt bezüglich des beweglichen Metallteils (21) einzustellen.
